Europäisches Patentamt

(19) European Patent Office

Office européen des brevets

(11) Numéro de publication : **0 290 312 B1**

(12) # FASCICULE DE BREVET EUROPEEN

(45) Date de publication du fascicule du brevet :
**16.10.91 Bulletin 91/42**

(51) Int. Cl.⁵ : **H02G 3/06**

(21) Numéro de dépôt : **88400988.7**

(22) Date de dépôt : **22.04.88**

(54) **Entrée de câble antidéflagrante.**

(30) Priorité : **04.05.87 FR 8706238**

(43) Date de publication de la demande :
**09.11.88 Bulletin 88/45**

(45) Mention de la délivrance du brevet :
**16.10.91 Bulletin 91/42**

(84) Etats contractants désignés :
**BE CH DE ES FR GB IT LI NL SE**

(56) Documents cités :
**DE-A- 3 300 809
GB-A- 721 047
US-A- 2 686 828**

(73) Titulaire : **CAPRI-CODEC S.A.:Société
anonyme dite
24 à 32 rue Ernest Renan
F-92707 Colombes Cédex (FR)**

(72) Inventeur : **de Vienne, Robert
8 bis, Rue Laurent Pichat
F-75116 Paris (FR)**

(74) Mandataire : **Clisci, Serge et al
S.A. FEDIT-LORIOT CONSEILS EN
PROPRIETE INDUSTRIELLE 38, avenue Hoche
F-75008 Paris (FR)**

EP 0 290 312 B1

## Description

La présente invention concerne l'industrie du petit matériel électrique et plus particulièrement celle des entrées de câble, ou presse-étoupes, permettant le passage et le maintien d'un câble, d'un tube, d'une tige, ou tout autre objet allongé, à la traversée d'une paroi, tout en assurant l'étanchéité entre les deux côtés de la paroi.

Ce matériel est soumis à des prescriptions strictes concernant notamment la résistance du câble à l'arrachement par traction, les dimensions des garnitures d'étanchéité, la résistance à une différence élevée de pression entre les deux côtés de la paroi, la résistance au choc.

Ces contraintes sont cause d'inconvénients pour l'utilisateur des entrées de câble commercialisées jusqu'ici, notamment en ce qui concerne l'encombrement, l'accès difficile des organes de serrage des garnitures et des câbles, la faible capacité de serrage.

Ces inconvénients découlent pour la plus grande part de la conception et de la structure des entrées de câble classiques, dans lesquelles la compression de la garniture s'effectue au moyen de vis axiales situées de part et d'autre du câble, et de ce fait peu accessibles, cependant que l'assujettissement du corps de l'entrée de câble dans la paroi traversée s'effectue par vissage à l'aide d'outils qui ne trouvent pas de prise accessible lorsque le câble est en place. De plus, les vis de serrage des organes de maintien du câble peuvent se trouver orientées d'un côté difficilement accessible suivant l'immobilisation du corps de l'entrée de câble dans la paroi traversée.

Du document US-A-721047 une entrée de câble présentant toutes les caractéristiques mentionnées dans le préambule de la revendication 1 est déjà connue.

L'invention a pour but de pallier les inconvénients du matériel classique et de permettre la réalisation d'une entrée de câble à grande capacité de serrage, dont les organes de serrage de la garniture et du câble sont orientables sur le corps déjà immobilisé dans la paroi, et présentant des prises pour des outils de vissage du corps dans la paroi traversée constamment accessibles.

L'invention a pour objet une entrée de câble antidéflagrante comprenant un corps tubulaire dont une extrémité comporte des moyens de fixation étanche dans un orifice de la paroi à traverser et qui renferme, en butée contre un épaulement dans un alésage axial, une garniture d'étanchéité cylindrique déformable contre le câble par des moyens de compression prenant appui sur le corps, et constitués par un refouloir comprenant une bague coulissant dans l'alésage vers la garniture à l'intérieur du corps et dont une face axiale porte contre l'extrémité libre de la garniture, tandis que la face opposée saillant à l'extérieur du corps coopère pour un effet de coin avec des prolongements de deux brides antagonistes de serrage radial dont les extrémités respectives sont réunies par des moyens manuels de rapprochement librement accessibles, les brides débattant librement radialement ; — entrée de câble caractérisée en ce que les brides sont contenues axialement dans des lumières radiales d'une cage tubulaire assujettie à l'extrémité libre du corps, la cage étant montée pivotante en bout du corps contre lequel elle peut être maintenue, dans la position angulaire désirée, par des moyens de serrage manuels librement accessibles.

Suivant diverses variantes, l'extrémité de la bague du refouloir coopérant avec les prolongements des brides peut être tronconique, en contact avec une face de même conicité des prolongements, ou tangentée par une face sphéroïdale ou un bord émoussé des prolongements ; ou bien l'extrémité de la bague peut être sphéroïdale et tangenter une face tronconique ou sphéroïdale ou un bord émoussé des prolongements ; ou encore l'extrémité de la bague peut présenter un bord émoussé portant sur une face tronconique ou sphéroïdale des prolongements. Quelle que soit la forme de réalisation envisagée il y a un effet de coin entre l'extrémité de la bague et les prolongements des brides de serrage.

La cage d'une entrée de câble suivant l'invention est montée pivotante en bout du corps contre lequel elle peut être maintenue, dans la position angulaire désirée, par des moyens de serrage manuels librement accessibles.

Les moyens de serrage pour le maintien de la cage sont constitués par une bague taraudée moletée vissant sur une extrémité filetée de la cage et prenant appui par un rebord annulaire interne contre un épaulement annulaire externe de l'extrémité du corps.

Suivant une disposition constructive, les moyens de fixation du corps dans un orifice taraudé de la paroi à traverser sont constitués par un filetage correspondant de l'extrémité du corps contigu à des faces planes ou évidements de la paroi latérale du corps constituant des emplacements librement accessibles de préhension par des outils de vissage du corps dans l'orifice de la paroi.

La cage d'une entrée de câble suivant l'invention peut comporter également des moyens d'immobilisation du câble en translation axiale, librement accessibles du même côté de la cage que les moyens de rapprochement des brides de refoulement, de la bague de compression de la garniture, l'extrémité libre de la cage étant intérieurement arrondie, sans bord vif.

Grâce au mode original de mouvement des pièces constituant une entrée de câble suivant l'invention la capacité de serrage est très grande, ainsi, avec une garniture conforme aux normes françaises, de 4,5 mm d'épaisseur on peut assurer le maintien étanche de câbles de diamètres allant de 12 à 17 mm, et avec une garniture de 3 mm d'épaisseur celui de câbles de diamètres allant de 17 à 20 mm.

Il est possible d'orienter les vis des brides de serrage de la garniture et des brides d'ancrage du câble par rotation de la cage avant serrage sur le corps déjà immobilisé dans un trou de la paroi à traverser.

La déformation de la garniture par un système de glissement de rampes inclinées commandé par vis développe une grande force de compression pour un effort démultiplié, ce qui facilite le montage.

L'immobilisation dans la cage du corps des brides de serrage et d'ancrage rend impossible la perte de ces brides lors du stockage, du transport et du montage.

Le centrage du câble est respecté au niveau de l'ancrage du fait de l'indépendance transversale des brides.

L'entraînement en rotation du câble est impossible du fait de l'absence de pièce principale tournante.

Les vis des brides de serrage et d'ancrage se présentent dans un même plan orienté à volonté, ce qui permet une pose rapide et facile.

Le passage du câble s'effectue sans démontage de l'entrée de câble, ce qui permet des pré-montages en atelier.

L'adaptation d'une entrée de câble suivant l'invention au passage de câbles à fibres optiques est aisée : il suffit de remplacer la garniture unique par plusieurs garnitures empilées avec au moins une rondelle rigide intermédiaire du même diamètre, suivant une technique connue.

Le câble est protégé contre des blessures éventuelles par les bords de l'entrée de câble du fait de la forme arrondie de ceux-ci.

Afin de faciliter la compréhension de l'invention, un mode de réalisation, et quelques variantes, parmi ceux en visageables par l'Homme de l'Art, sont représentés sur les dessins annexés où :

la figure 1 est une vue schématique en élévation et en demi-coupe diamétrale d'une entrée de câble suivant l'invention ;

la figure 2 est une vue partiellement en coupe suivant la ligne A-A de la figure 1, pour la moitié à droite, et suivant la ligne B-B de la figure 1, pour la moitié à gauche ;

la figure 3 est une vue partielle en coupe diamétrale montrant la position de la bague de compression de la garniture et d'un prolongement de la bride de serrage, avant serrage ;

la figure 4 est une vue analogue à celle de la figure 3, mais après serrage ;

la figure 5 est une vue schématique, en plan, d'une bride de serrage de l'entrée de câble de la figure 1 ;

la figure 6 est une vue de la même bride suivant la flèche C de la figure 5 ;

la figure 7 est une vue en coupe suivant la ligne D-D de la figure 5 ;

la figure 8 est une vue schématique, en élévation et demi-coupe diamétrale d'une variante de bague de compression de la garniture ;

les figures 9a, 9b, 9c sont des vues schématiques en élévation et demi-coupe diamétrale de variantes de forme de garniture ;

les figures 10a à 10h sont des vues schématiques partielles en coupe diamétrale, de variantes de formes des parties en contact de bague de compression de garniture et de prolongements de bride de serrage, à effet de coin ;

la figure 11 est une vue schématique, en élévation et demi-coupe diamétrale d'une variante de corps ; et,

la figure 12 est une vue en élévation et en coupe diamétrale d'une variante simplifiée d'entrée de câble suivant l'invention.

Sur ces figures, les éléments correspondants sont désignés par les mêmes références numériques, éventuellement affectées d'un indice.

Les dimensions et les proportions respectives des éléments n'ont pas été respectées pour une meilleure compréhension et plus de clarté des dessins.

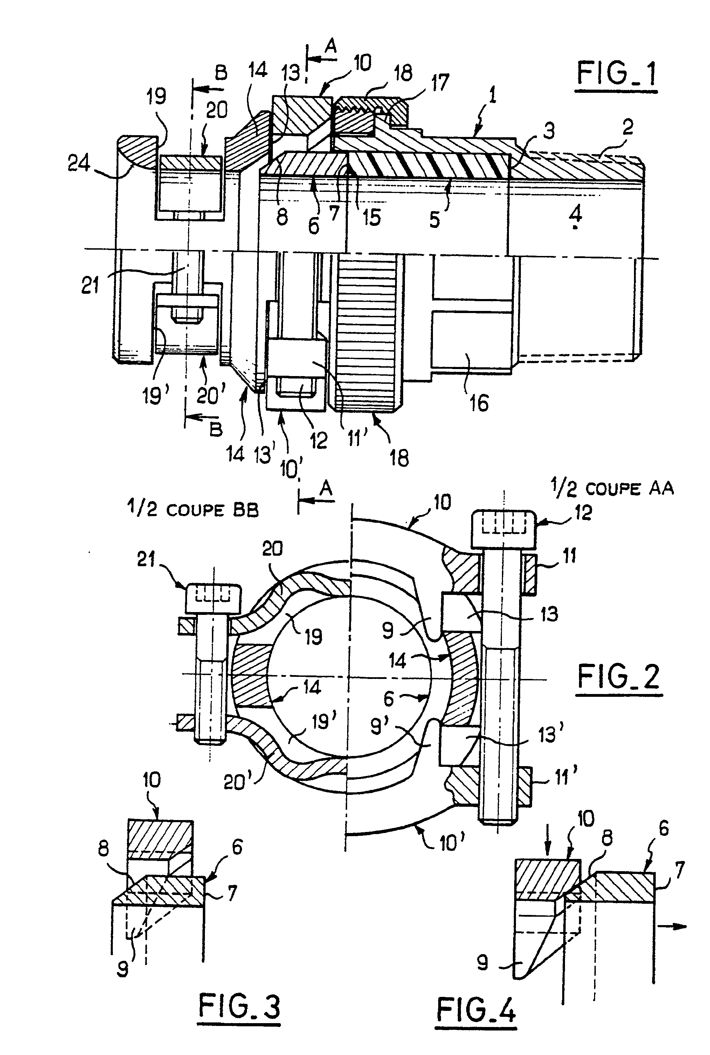

L'entrée de câble antidéflagrante suivant l'invention, représentée sur les figures 1 à 7 comprend essentiellement un corps tubulaire 1 dont une extrémité présente un filetage extérieur conique 2 pour la fixation dans un orifice taraudé de la paroi à traverser. Suivant le procédé classique, on recouvre un tel filetage d'une pellicule plastique ou d'une pâte avant vissage pour assurer l'étanchéité. Au voisinage immédiat du filetage la paroi extérieure du corps 1 est taillée par des à-plats 16 formant un six-pans pour la préhension avec une clé et faciliter le vissage et le blocage du corps dans l'orifice taraudé de la paroi à traverser. Au voisinage de son extrémité opposée au filetage 2 le corps 1 présente un rebord annulaire 17 dont une face sert de butée en bout à une cage tubulaire coaxiale 14 et la face opposée sert de butée à un rebord annulaire interne d'une bague 18 moletée et taraudée vissant sur le bord latéral fileté de l'extrémité de la cage 14 pour l'immobiliser à volonté par blocage sur le rebord 17 du corps 1 dans la position angulaire désirée.

L'alésage 4 intérieur du corps 1 présente un épaulement interne 3 servant de butée à une extrémité d'une garniture d'étanchéité 5 déformable annulaire dont l'extrémité opposée 15 porte contre la face axiale 7 d'une extrémité d'une bague de compression 6 coulissant librement dans l'alésage 4 du corps 1 et dont la face opposée 8, saillant à l'extérieur du corps 1 est tronconique.

Cette face tronconique 8 de la bague de compression 6 est en contact glissant avec des prolongements 9, 9' opposés deux à deux de brides de refoulement 10, 10' antagonistes, de serrage radial, maintenues axialement mais débattant librement radialement dans des lumières radiales 13, 13' de la cage 14. Les brides 10, 10′ sont accouplées par des vis 12 à leurs extrémités 11, 11′. Les vis 12 traversent librement une bride 10 par un trou lisse et vissent dans un trou taraudé de l'autre bride 10′ pour rapprocher les deux brides 10, 10′ l'une de l'autre et refouler, par un effet de coin, la bague de compression 6 vers l'intérieur du corps 1 en déformant la garniture 5. Cet effet de translation à angle droit, ou effet de coin, est illustré par les figures 3 et 4 où les positions respectives de la bague 6 par rapport au prolongement 9 de la bride 10 sont respectivement représentées avant rapprochement des brides 10, 10′ sur la figure 3, et après rapprochament sur la figure 4.

La cage 14 présente également deux autres lumières radiales 19, 19′, parallèles aux lumières 13, 13′, dans lesquelles sont contenues axialement mais débattent librement radialement deux brides 20, 20′ d'ancrage du câble, classiques, accouplées par des vis d'extrémité 21 de manière analogue aux brides de refoulement 10, 10′.

L'extrémité libre de la cage 14 s'évase intérieurement par une partie semi-torique 24 qui évite toute meurtrissure au câble à sa sortie de la cage. Les vis 12 et 21 des brides 10, 10′ et 20, 20′ respectivement, sont ainsi situées à proximité les unes des autres dans des plans parallèles, d'un même côté de la cage 14 qui est orientable avant blocage. Ainsi l'utilisateur peut choisir à son gré la meilleure disposition dans laquelle il aura l'accès le plus commode à tous les moyens de blocage du corps de l'entrée de câble, et des brides de refoulement de la garniture et d'ancrage du câble, qui restent toujours librement accessibles.

On obtient en pratique de bons résultats avec une bague 6 tronconique de 37° 30′ environ d'inclinaison et des prolongements de brides 10 de même inclinaison, en alliage d'aluminium, mais ces valeurs préférées pour un usage courant peuvent varier suivant les applications ainsi que les coefficients de frottement des matériaux en contact glissant.

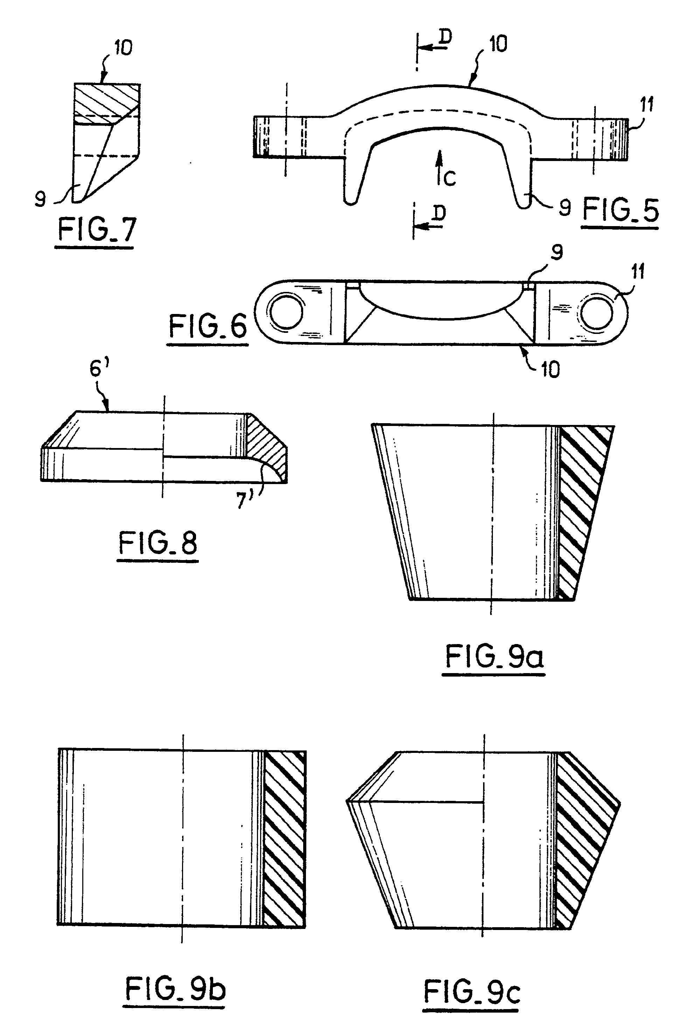

Dans la variante de bague de compression 6′ représentée sur la figure 8, la face d'extrémité 7′ en contact avec la garniture est incurvée, sphéroïdale, ce qui facilite le refoulement vers l'axe de la garniture.

Les figures 9a à 9c illustrent des variantes de forme de la garniture annulaire dont l'intérieur est toujours cylindrique alors que l'extérieur est tronconique sur la figure 9a, cylindrique sur la figure 9b, et bi-tronconique sur la figure 9c. On peut, bien entendu, concevoir d'autres variantes suivant la nature de la garniture et pour des applications particulières.

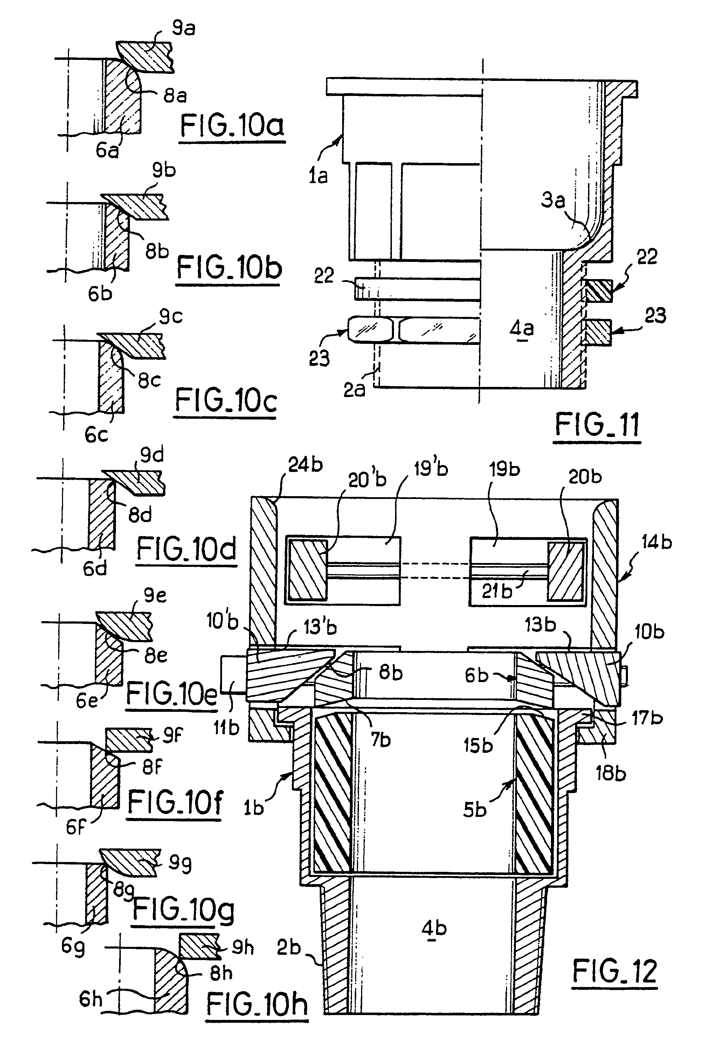

Diverses variantes, de combinaisons de profil de faces réciproquement en contact du bord 8 de la bague de compression 6 et des prolongements 9 des brides de refoulement sont représentées sur les figures 10a à 10h. Sur la figure 10a les deux faces 8a et 9a sont sphéroïdales, tandis que les faces 8b et 9b sont toutes deux tronconiques sur la figure 10b. Sur la ligne 10c la face terminale 8c de la bague est sphéroïdale tandis que la face 9c du prolongement est tronconique. Sur la figure 10d la face 9d du prolongement est tronconique, mais la face 8d de la bague est constituée par un bord émoussé de sa tranche droite. Sur la figure 10e la face 8e de la bague est tronconique cependant que la face 9e du prolongement est sphéroïdale. Sur la figure 10f, la face 8f de la bague est tronconique tandis que la face 9f du prolongement est constituée par le bord émoussé d'une section droite. Sur la figure 10g la face 9g du prolongement est sphéroïdale alors que la face 8g de la bague est constituée par un bord émoussé d'une tranche droite. Sur la figure 10h, la face 8h de la bague est sphéroïdale et la face 9h du prolongement est constituée par un bord émoussé d'une section droite.

Dans la variante de corps 1a représentée sur la figure 11, l'épaulement interne 3a de butée de la garniture est incurvé, sphéroïdal, pour faciliter le refoulement de la garniture vers l'axe. Cette variante peut être heureusement combinée avec la variante de bague de refoulement de la figure 8. Par ailleurs le filetage 2a de l'extrémité du corps 1a est cylindrique. Un joint annulaire 22 assure l'étanchéité. Un écrou six-pans 23 permet, dans le cas de fixation de l'entrée de câble dans un trou lisse d'une paroi, d'assurer le blocage du corps de l'autre côté de la paroi. Il est inutile dans le cas d'un trou taraudé.

L'autre variante simplifiée d'entrée de câble représentée sur la figure 12 a un corps 1b qui ne diffère du corps 1 du mode de réalisation de la figure 1 que par le fait que le rebord annulaire 17b arase l'extrémité du corps 1b. La bague 6b est bi-conique et la garniture 5b a une extrémité 15b de même conicité que la face en contact 7b de la bague de compression 6b. La différence principale réside dans le fait que la cage 14b est cylindrique et comporte un rebord 18b qui vient s'engager en butée en-dessous du rebord 17b, comme la bague taraudée moletée 18 du mode de réalisation de la figure 1. Deux brides de refoulement, 10b, 10′b à profil conique coopèrent avec la face de même conicité 8b de la bague 6b. Ces brides 10b, 10′b débattent librement radialement dans des lumières radiales 13b, 13′b de la cage 14b et sont maintenues axialement entre les parois des lumières respectives 13b, 13′b, mais aussi en glissement sur la face externe du rebord 17b, assurant ainsi le blocage de la cage 14b sur le corps 1b. Deux brides 20b, 20′b d'ancrage du câble débattent dans des lumières radiales 19b, 19′b respectivement, de la même façon que dans le mode de réalisation de la figure 1. Le serrage des brides de refoulement et d'ancrage est assuré également par des vis 11b, 21b respectivement, et l'alésage intérieur de la cage 14b se termine par un arrondi semi-torique 24b.

Ce mode de réalisation de la figure 12 comporte une pièce de moins que celui de la figure 1 : la bague taraudée moletée 18, mais la cage 14b est plus volumineuse puisqu'elle doit pouvoir être enfilée autour du rebord 17b du corps. Les impératifs d'applications et de réalisations particulières guideront le choix de l'utilisateur, compte tenu du mode de fabrication retenu : moulage ou décolletage par exemple.

**Revendications**

1. Entrée de câble antidéflagrante comprenant un corps tubulaire (1) dont une extrémité comporte des moyens (2) de fixation étanche dans un orifice de la paroi à traverser et qui renferme, en butée contre un épaulement (3) dans un alésage axial (4), une garniture d'étanchéité (5) cylindrique déformable contre le câble par des moyens de compression (5) prenant appui sur le corps, et constitués par un refouloir comprenant une bague (6) coulissant dans l'alésage vers la garniture (5) à l'intérieur du corps (1) et dont une face axiale (7) porte contre l'extrémité libre (15) de la garniture (5), tandis que la face opposée (8) saillant à l'extérieur du corps (1) coopère pour un effet de coin avec des prolongements (9, 9') de deux brides antagonistes (10, 10') de serrage radial, dont les extrémités respectives (11, 11') sont réunies par des moyens manuels de rapprochement (12) librement accessibles, les brides (10, 10') débattant librement radialement ; — entrée de câble caractérisée en ce que les brides (10, 10') sont contenues axialement dans des lumières radiales (13, 13') d'une cage tubulaire (14) assujettie à l'extrémité libre du corps (1), la cage (14) étant montée pivotante en bout du corps (1) contre lequel elle peut être maintenue, dans la position angulaire désirée, par des moyens de serrage manuels (18) librement accessibles.

2. Entrée de câble suivant la revendication 1, caractérisée en ce que les moyens de serrage pour le maintien de la cage (14) sont constitués par une bague (18) taraudée moletée vissant sur une extrémité filetée de la cage (14) et prenant appui par un rebord annulaire interne contre un épaulement annulaire externe (17) de l'extrémité du corps.

3. Entrée de câble suivant l'une des revendications 1 et 2, caractérisée en ce que la face (8b) d'extrémité de la bague (6b) du refouloir coopérant avec les prolongements des brides est tronconique, en contact avec une face (9b) de même conicité des prolongements.

4. Entrée de câble suivant l'une des revendications 1 et 2, caractérisée en ce que l'extrémité de la bague de refouloir coopérant avec les prolongements des brides est sphéroïdale (8a, 8c), et tangente une face tronconique (9c), ou sphéroïdale (9a), des prolongements.

5. Entrée de câble suivant l'une des revendications 1 et 2, caractérisée en ce que l'extrémité de la bague du refouloir coopérant avec les prolongements des brides est droite à bord émoussé (8d, 8g) et tangente une face tronconique (9d) ou sphéroïdale (9g) des prolongements.

6. Entrée de câble suivant l'une des revendications 1, caractérisée en ce que l'extrémité de la bague du refouloir coopérant avec les prolongements des brides est tronconique (8f) ou sphéroïdale (8h) et tangentée par un bord émoussé (9f, 9h) des prolongements.

7. Entrée de câble suivant l'une des revendications 1 et 2, caractérisée en ce que l'extrémité de la bague du refouloir coopérant avec les prolongements des brides est tronconique (8e) et tangentée par une face sphéroïdale (9e) des prolongements.

8. Entrée de câble suivant l'une des revendications 1 à 7, carctérisée en ce que la cage (14) comporte également des moyens d'immobilisation (20, 20', 21) du câble en translation axiale, librement accessibles du même côté de la cage (14) que les moyens de rapprochement (12) des brides de refoulement (10, 10') de la bague (6) de compression de la garniture (5).

**Patentansprüche**

1. Explosionsgeschützte Kabeleinführung mit einem tubusförmigen Körper (1), dessen eines Ende Befestigungsmittel (2) beinhaltet, die eine Durchgangsöffnung einer Wand abdichten und der eine gegen einen Vorsprung (3) in einer axialen Bohrung (4) stoßende zylindrische Dichtung (5) beinhaltet, die gegen das Kabel durch Kompressionsmittel (5) verformbar ist, haftend an dem Körper anliegt und aus einem Staucher mit einem in der Bohrung gegen die Dichtung (5) in das Innere des Körpers (1) verschieblichen Ring (6) besteht, dessen eine axiale Stirnseite (7) gegen das freie Ende (15) der Dichtung (5) stößt, wohingegen die gegenüberliegende Stirnseite (8) aus dem Körper (1) nach Außen vorkragt und mit Fortsätzen (9, 9') zweier gegeneinanderwirkender radialabdichtender Flansche (10, 10') über Eck zusammenwirkt, wobei die Enden (11, 11') durch manuell verstellbare, frei zugängliche Feinsteinstellungen (12) verbunden sind und die Flansche (10, 10') frei radial aneinanderstoßen, dadurch gekennzeichnet, daß die Flansche (10, 10') axial in radiale Einsätze (13, 13') eines tubusförmigen Aufsatzes (14) fortgesetzt sind, der am freien Ende des Körpers (1) befestigt ist, wobei der Aufsatz (14) drehbar am Endstück des Körpers (1) angebracht ist, gegen den er durch frei zugängliche manuelle Klemmittel (18) in der gewünschten Winkelstellung gehalten werden kann.

2. Explosionsgeschützte Kabeleinführung nach Anspruch 1, dadurch gekennzeichnet, daß die Klemmittel zum Halten des Aufsatzes (14) aus einem mit Schraubgewinde versehenen, gerieften Ring (18) bestehen, der auf ein mit Außengewinde versehenes Ende des Aufsatzes (14) geschraubt ist, wobei der Ring (18) mit einer inneren ringförmigen Krempe

gegen einen äußeren flanschartigen Ansatz (17) des Fortsatzes des Körpers hält.

3. Explosionsgeschützte Kabeleinführung nach Anspruch 1 oder 2, dadurch gekennzeichnet, daß die mit den Fortsätzen der Flansche zusammenwirkende Außenseite (8b) des Endes des Stauchringes (6b) kegelstumpfförmig ist und in Berührung mit einer Fortsatz-Außenwandung (9b) gleich großer Kegelneigung steht.

4. Explosionsgeschützte Kabeleinführung nach Anspruch 1 oder 2, dadurch gekennzeichnet, daß das mit den Fortsätzen der Flansche zusammenwirkende Ende des Stauchringes sphäroidisch ist und eine kegelstumpfartige (9c) oder sphäroidische (9a) Außenwandung der Fortsätze berührt.

5. Explosionsgeschützte Kabeleinführung nach Anspruch 1 oder 2, dadurch gekennzeichnet, daß das mit den Fortsätzen der Flansche zusammenwirkende Ende des Stauchringes rechtwinklig abgestumpft (8d, 8g) ist und eine kegelstumpfartige (9c) oder sphäroidische (9a) Außenwandung des Fortsatzes berührt.

6. Explosionsgeschützte Kabeleinführung nach Anspruch 1 oder 2, dadurch gekennzeichnet, daß das mit den Fortsätzen der Flansche zusammenwirkende Ende des Stauchringes (6b) kegelstumpfartig (8f) oder sphäroidisch (8h) ist und durch eine stumpfe Kante (9f, 9h) der Außenwandung des Fortsatzes berührt wird.

7. Explosionsgeschützte Kabeleinführung nach Anspruch 1 oder 2, dadurch gekennzeichnet, daß das mit den Fortsätzen der Flansche zusammenwirkende Ende des Stauchringes (6b) kegelstumpfartig (8e) ist und durch eine sphäroidische Kante (9e) der Außenwandung des Fortsatzes berührt wird.

8. Explosionsgeschützte Kabeleinführung nach einem der Ansprüche 1 bis 7, dadurch gekennzeichnet, daß der Aufsatz (14) in gleicher Weise Mittel (20, 20', 21) zum Verriegeln des Kabels gegen axiale Bewegungen beinhaltet, die auf der selben Seite des Aufsatzes (14) frei zugänglich sind, wie die Feinsteinstellmittel (12) der Stauchflansche (10, 10') des Druckringes (6) der Dichtung (5).

## Claims

1. Explosion-proof cable bushing comprising a tubular body (1), one end of which comprises means (2) for leaktight fixing in an orifice of the wall to be traversed and which encloses, abutting a shoulder (3) in an axial bore (4), a cylindrical packing (5) which can be deformed against the cable by compression means (5) bearing on the body and consisting of a rammer comprising a ring (6) sliding in the bore towards the packing (5) within the body (1), and one axial face (7) of which bears against the free end (15) of the packing (5), whilst the opposite face (8) projecting away from the body (1) interacts, for a wedge effect, with extensions (9, 9') of two radial-clamping opposing brackets (10, 10'), the respective ends (11, 11') of which are joined together by freely accessible, manual bringing-together means (12), the brackets (10, 10') moving freely radially ; which cable bushing is characterised in that the brackets (10, 10') are contained axially in radial slots (13, 13') of a tubular cage (14) fixed to the free end of the body (1), the cage (14) being mounted pivotably at the end of the body (1) against which it can be held, in the desired angular position, by freely accessible manual clamping means (18).

2. Cable bushing according to Claim 1, characterised in that the clamping means for holding the cage (14) consist of a knurled tapped ring (18) which screws onto a threaded end of the cage (14) and bears by way of an inner annular rim against an outer annular shoulder (17) of the end of the body.

3. Cable bushing according to one of Claims 1 and 2, characterised in that the end face (8b) of the ring (6b) of the rammer interacting with the extensions of the brackets is frustoconical, in contact with a face (9b) of the same taper of the extensions.

4. Cable bushing according to one of Claims 1 and 2, characterised in that the end of the rammer ring interacting with the extensions of the brackets is spheroidal (8a, 8c) and is tangential to a frustoconical (9c) or spheroidal (9a) face of the extensions.

5. Cable bushing according to one of Claims 1 and 2, characterised in that the end of the ring of the rammer interacting with the extensions of the brackets is straight with a blunted edge (8d, 8g) and is tangential to a frustoconical (9d) or spheroidal (9g) face of the extensions.

6. Cable bushing according to one of Claims 1 and 2, characterised in that the end of the ring of the rammer interacting with the extensions of the brackets is frustoconical (8f) or spheroidal (8h) and is tangential to a blunted edge (9f, 9h) of the extensions.

7. Cable bushing according to one of Claims 1 and 2, characterised in that the end of the ring of the rammer interacting with the extensions of the brackets is frustoconical (8e) and is tangential to a spheroidal face (9e) of the extensions.

8. Cable bushing according to one of Claims 1 to 7, characterised in that the cage (14) also comprises means (20, 20', 21) for immobilising the cable in axial translational movement, which means are freely accessible from the same side of the cage (14) as the means (12) for bringing together the brackets (10, 10') for pushing back the compression ring (6) of the packing (5).

FIG_1

1/2 COUPE BB

1/2 COUPE AA

FIG_2

FIG_3

FIG_4

FIG.7

FIG.5

FIG.6

FIG.8

FIG.9a

FIG.9b

FIG.9c

FIG.10a

FIG.10b

FIG.10c

FIG.10d

FIG.10e

FIG.10f

FIG.10g

FIG.10h

FIG_11

FIG_12